# EUROPÄISCHE PATENTSCHRIFT

(11) **EP 2 459 894 B1**
(45) Veröffentlichungstag und Bekanntmachung des Hinweises auf die Patenterteilung: **25.02.2015**
(21) Anmeldenummer: 10720632.8
(22) Anmeldetag: 01.06.2010
(51) Int. Cl.: F16C 35/077, H02K 7/116

(54) **LAGEREINRICHTUNG**
BEARING ARRANGEMENT
DISPOSITIF DE PALIER À ROULEMENT

(30) Priorität: 30.07.2009 DE 102009028133
(43) Veröffentlichungstag der Anmeldung: 06.06.2012
(73) Patentinhaber: Robert Bosch GmbH, 70442 Stuttgart (DE)
(72) Erfinder: HUESGES, Mario, 77830 Buehlertal (DE); LAUK, Detlef, 77871 Renchen (DE)
(86) Internationale Anmeldenummer: PCT/EP2010/057630
(87) Internationale Veröffentlichungsnummer: WO 2011/012354

(56) Entgegenhaltungen:
- WO-A1-2006/030090
- DE-U1- 7 623 170
- DE-U1- 9 318 402
- DE-U1- 20 304 989
- FR-A1- 2 592 108
- FR-A3- 2 892 478
- JP-A- 7 158 647
- US-A1- 2001 022 871
- US-A1- 2007 012 125
- US-A1- 2008 179 117
- 'Rollieren', [Online] 16 Juli 2012, Seiten 1 - 1, XP055076006 Gefunden im Internet: <URL:http://www.tiefbohr-lexikon.de/Buchsta be_R/Rollieren/rollieren.html> [gefunden am 2013-08-21]
- HÄUSER K.: 'Rollieren und Rolliermaschinen' TECHNISCHE RUNDSCHAU Bd. 54, Nr. 48, 16 November 1962, Seiten 9A - 12A, XP001440991
- 'Rollieren und Glattwalzen VDI/VDE 2032 Dezember 1975', [Online] 25 März 2002, DÜSSELDORF, Seiten 1 - 1, XP055076015 Gefunden im Internet: <URL:http://www.vdi.de/uploads/tx_vdirili/p df/1361566.pdf> [gefunden am 2013-08-21]

## Beschreibung

### Stand der Technik

Die Erfindung betrifft **einen elektrischen Antrieb mit einem Elektromotor und einer Lagereinrichtung nach der Gattung** des Anspruchs 1.

Eine derartige Lagereinrichtung ist aus der US 2001/0022871 A1 bekannt. Bei der bekannten Lagereinrichtung ist es vorgesehen, dass ein Lagerkörper mit seiner einen Stirnseite gegen einen radial nach innen gezogenen Rand der Lagereinrichtung axial anliegt, und die axiale Fixierung des Lagers innerhalb der Lagereinrichtung durch ein Umformen eines Teilsbereichs der Lagereinrichtung erfolgt, indem ein entsprechendes Präge- bzw. Umformwerkzeug auf der dem eingezogenen Abschnitt der Lagereinrichtung gegenüberliegenden Seite der Lagereinrichtung axial auf diese einwirkt und entsprechende Teilabschnitte radial nach innen umformt, die zumindest mittelbar an dem Lagerkörper anliegen.

Aus der FR 2 592108 A1 ist eine weitere Lagereinrichtung nach **der Gattung** des Anspruchs 1 bekannt, bei der die axiale Positionierung des Lagers innerhalb der Lagereinrichtung ebenfalls durch von einer Stirnseite der Lagereinrichtung her radial nach innen umgeformte Bereiche erfolgt.

Die US2007012125, die als nächstliegender Stand der Technik angesehen wird, offenbart einen elektrischen Antrieb mit einem Elektromotor und einer Lagereinrichtung, die einen Lagerkörper sowie eine Positioniereinrichtung für den Lagerkörper aufweist, wobei der Lagerkörper in Wirkverbindung mit einem zu lagernden Element angeordnet ist, wobei die Positioniereinrichtung den Lagerkörper formschlüssig aufnimmt und die Positioniereinrichtung mit einem Aufnahmekörper verbunden ist, wobei das zu lagernde Element eine Welle ist und die Welle in dem Lagerkörper drehbeweglich angeordnet ist, wobei die Positioniereinrichtung einen rohrartigen Abschnitt aufweist, der den Lagerkörper an seinem Außenumfang umfasst, wobei die Welle mit dem Elektromotor gekoppelt ist, deren Anker am einen Ende der Welle angeordnet ist, wobei mittels des anderen Endes der Welle über eine gewindeartige Ausbildung des Wellenstummels ein Zahn- bzw. Stirnrad antreibbar ist, und wobei der als Gehäuse ausgebildete Aufnahmekörper zur Aufnahme bzw. Befestigung des Zahn- bzw. Stirnrades und der Positioniereinrichtung dient.

Weiterhin ist es bereits allgemein bekannt, als Gleit- oder Kugellager ausgebildete Lagerkörper in Gehäusen zu fixieren, indem sie von einer Seite her direkt in ein Gehäuseteil eingebracht werden. Entgegen der Montagerichtung halten die Lagerkörper durch Kraft- oder Formschluss. Der Formschluss wird in der Regel über Elemente wie Federscheiben, Sicherungs- oder Sprengringe, oder über Formteile, die fest mit dem Gehäuseteil verbunden sind, hergestellt. Die Abstützung bzw. Krafteinleitung findet in der Regel direkt über das Gehäuse oder über das Formschluss erzeugende Element statt. Um den festen Sitz des Lagerkörpers zu erzielen, ist es erforderlich, genau gefertigte Teile, federnde Elemente, oder einen Einstellprozess vorzusehen.

### Offenbarung der Erfindung

Ausgehend von dem nächstliegenden Stand der Technik liegt der Erfindung die Aufgabe zugrunde, einen elektrischen Antrieb nach **der Gattung** des Anspruchs 1 derart weiterzubilden, dass die Lagereinrichtung eine gegenüber dem Stand der Technik alternative axiale Befestigung bzw. Positionierung des Lagers innerhalb **eines Aufnahmekörpers** ermöglicht. Diese Aufgabe wird erfindungsgemäß bei einem elektrischen Antrieb mit den Merkmalen des Anspruchs 1 dadurch gelöst, dass der wenigstens eine Teilbereich durch eine zylindrische Wand des rohrartigen Abschnitts der Positioniereinrichtung gebildet ist, wobei der wenigstens eine Teilbereich durch ein **Umformprozess** ausgebildet ist.

Es ist somit vorgesehen, dass das zu lagernde Element eine Welle ist und die Welle in dem Lagerkörper drehbeweglich angeordnet ist. Dieser typische Anwendungsfall benötigt somit keine gemäß dem Stand der Technik aufwändig und genau gefertigten Bauteile zur Positionierung des Lagerkörpers auf der Welle bzw. in der Baugruppe. Weiterhin ist es vorgesehen, dass die Positioniereinrichtung einen rohrartigen Abschnitt aufweist, der den Lagerkörper an seinem Außenumfang umfasst und, dass wenigstens ein Teilbereich des rohrartigen Abschnitts gegen mindestens eine Stirnfläche des Lagerkörpers zur Axialfixierung des Lagerkörpers in dem Element in Anlagekontakt angeordnet ist. Insbesondere ist es vorgesehen, dass der wenigstens eine Teilbereich durch einen Umformprozess nach dem Erreichen der Endposition des Lagerkörpers mit diesem in Anlagekontakt gebracht ist. Mittels dieser Ausbildung des Teilbereiches lässt sich eine besonders feste Fixierung des Lagerkörpers in der Positioniereinrichtung erreichen, die auch nur mit erheblichem Aufwand wieder gelöst werden kann. Weiterhin ist es vorgesehen, dass auf der dem Teilbereich gegenüberliegenden Seite des Lagerkörpers die Positioniereinrichtung einen flanschartigen Bund mit einer Öffnung zur Durchführung der Welle aufweist, der als Axialanschlag für den Lagerkörper ausgebildet ist.

Vorteilhafte Weiterbildungen der erfindungsgemäßen Lagereinrichtung sind in den Unteransprüchen aufgeführt.

Eine kostengünstige Herstellbarkeit der Lagereinrichtung bzw. der Positioniereinrichtung wird erzielt, wenn diese einstückig ausgebildet ist und aus Metall besteht Dabei können beispielsweise Tiefziehverfahren, falls die Positioniereinrichtung aus Blech gebildet ist, vorgesehen werden.

Um die Positioniereinrichtung großflächig und sicher mit dem Aufnahmekörper zu verbinden, ist es vorgesehen, dass die Positioniereinrichtung einen Befestigungsbereich aufweist, der mit dem Aufnahmekörper durch Form- oder Kraftschluss verbunden ist.

Insbesondere kann es dabei vorgesehen sein, dass der Befestigungsbereich als Befestigungsflansch ausgebildet ist.

Ein bevorzugter Einsatzbereich der erfindungsgemäßen Lagereinrichtung ist ein Fensterheber- oder ein Wischerantrieb für ein Kraftfahrzeug.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Antriebswelle mit einer Positioniereinrichtung und einem Lagerkörper vor der Montage in einem Aufnahmekörper in perspektivischer Ansicht und
- Fig. 2: die Anordnung gemäß Fig. 1 nach der Montage in einem Aufnahmekörper ebenfalls in perspektivischer Ansicht.

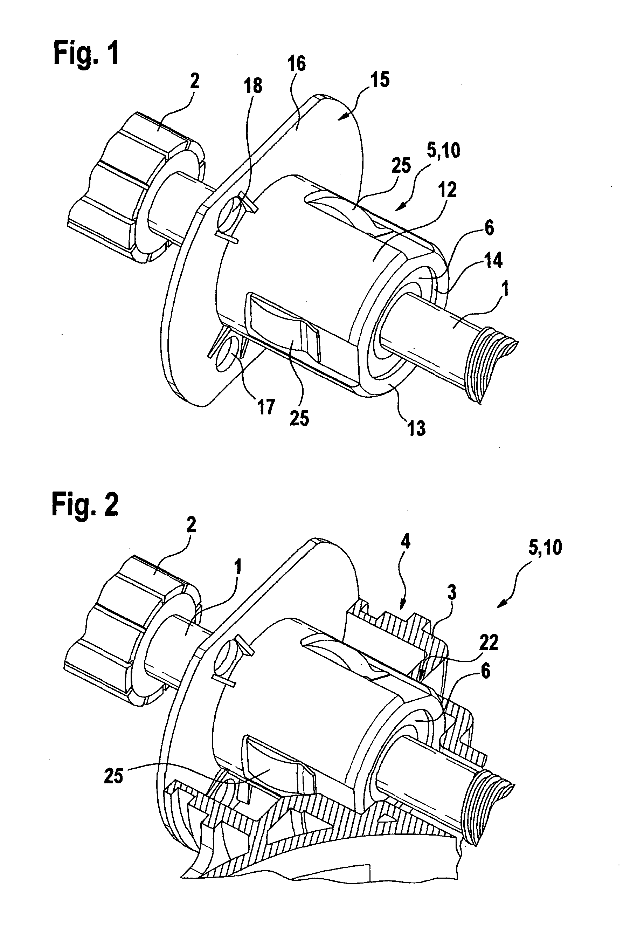

In der Fig. 1 ist eine Welle 1 dargestellt, welche insbesondere Bestandteil eines im Weiteren nicht näher dargestellten erfinderischen elektrischen Antriebs, zum Beispiel eines Fensterheberantriebs für ein Kraftfahrzeug ist. Die Welle 1 ist mit einem Elektromotor gekoppelt, deren Anker 2 am einen Ende der Welle 1 angeordnet ist. Mittels des anderen Endes der Welle 1 ist über eine gewindeartige Ausbildung des Wellenstummels ein Zahn- bzw. Stirnrad antreibber, welches in einem in der Fig. 2 lediglich ausschnittsweise dargestellten Gehäuseelement 3 angeordnet ist. Das Gehäuseelement 3 ist Bestandteil eines als Gehäuse 4 ausgebildeten Aufnahmekörpers, welches beispielsweise aus zwei Halbschalen besteht und aus Kunststoff oder Metall gefertigt ist. Das Gehäuse 4 dient nicht nur der Aufnahme bzw. Befestigung des nicht dargestellten Zahn- bzw. Stirnrades, sondern auch einer im Weiteren noch näher beschriebenen Positioniereinrichtung 10. Hierbei ist die Positioniereinrichtung 10 Bestandteil einer Lagereinrichtung 5, welche der Lagerung eines beispielsweise als Gleit- oder Wälzlager ausgebildeten Lagerkörpers 6 dient, in dem die Welle 1 drehbar gelagert ist.

Die Positioniereinrichtung 10 besteht entweder aus Kunststoff oder Metall, und ist bevorzugt einstückig ausgebildet. Die Positioniereinrichtung 10 weist einen rohrartigen Abschnitt 12 auf, der den Lagerkörper 6 an seinem Außenumfang formschlüssig aufnimmt. An der einen Stirnseite des rohrartigen Abschnitts 12 ist ein flanschartig ausgebildeter Bund 13 einstückig angeformt, welcher als erster Axialanschlag für den Lagerköper 6 dient. Der Bund 13 begrenzt eine Durchgangsöffnung 14 für die Welle 1. Am anderen Ende des rohrartigen Abschnitts 12 ist ein Befestigungsbereich 15 in Form eines Befestigungsflansches 16 angeformt. In dem Befestigungsflansch 16 sind mehrere Durchbrüche 17, 18 ausgebildet, welche insbesondere der Durchführung von elektrischen Anschlussleitungen für den Elektromotor dienen. Der so ausgebildete Befestigungsflansch 16 kann in eine Aufnahme 22 des Gehäuses 4 eingeschoben werden, wobei durch eine entsprechende Formgebung des Gehäuses 4 bzw. der Aufnahme 22 eine Fixierung bzw. Positionierung und Sicherung des Befestigungsflansches 16 in dem Gehäuse 4 erzielt wird. Insbesondere kann es möglich sein, dass die Positioniereinrichtung 10 mitsamt dem Lagerkörper 6 vorab mit dem Elektromotor gefertigt bzw. montiert wird und in einem relativ spät stattfindenden Fertigungs- bzw. Prozessschritt mit dem Gehäuse 4 durch Form- bzw. Kraftschluss gehalten ist, indem die Positioniereinrichtung 5 zwischen dem Gehäuse 4 und zum Beispiel einem Polrohr des Elektromotors angeordnet wird.

Um den Lagerkörper 6 in der Positioniereinrichtung 10 axial vollständig zu sichern ist ein zweiter Axialanschlag erforderlich, der mit der dem Bund 13 gegenüberliegenden Stirnfläche des Lagerkörpers 6 zusammenwirkt. Hierbei ist es gemäß, einer Alternative, die nicht zur Erfindung gehört, vorgesehen, dass in dem rohrartigen Abschnitt 12 mehrere, beispielsweise drei in vorzugsweise gleichmäßigen Winkelabständen zueinander angeordnete, als Federelemente 25 ausgebildete Teilbereiche angeordnet sind, die beispielsweise durch entsprechende U-förmige Stanzungen (falls die Positioniereinrichtung 10 aus Metall besteht) gebildet sind. Die Federelemente 25, die als Axialanschlag für den Lagerkörper 6 wirken, sind radial nach innen gebogen und besitzen in radialer Richtung eine Federwirkung. Beim Fügeprozess des Lagerkörpers 6 bzw. beim Einführen des Lagerkörpers 6 in Richtung des Bundes 13 federn die Federelemente 25 daher radial zunächst nach außen zurück, bevor diese, sobald der Lagerkörper 6 gegen den Bund 13 anliegt, radial nach innen federn und in Wirkverbindung mit der entsprechenden Stirnseite des Lagerkörpers 6 gelangen.

Alternativ hierzu ist es jedoch auch denkbar, dass die Federelemente 25 erst nach dem Einführen des Lagerkörpers 6 in den rohrartigen Abschnitt 12 nach innen gebogen werden, sobald der Lagerkörper 6 gegen den Bund 13 anliegt. Weiterhin ist es erfindungsgemäß hierzu vorgesehen, dass zylindrische Wand des rohrartigen Abschnitts 12 umformend einen dem Bund 13 gegenüberliegenden Hinterschnitt bildet. Hier bietet sich insbesondere eine Rollierverfahren an, um die entsprechende Umformung zu bewerkstelligen.

Anstelle einer aus Metall bestehenden Positioniereinrichtung 10 kann diese auch aus Kunststoff bestehen, und als Spritzgussteil ausgebildet sein. Ferner ist die Form bzw. die Ausbildung nicht auf die nach innen gebogenen Federelemente 25 beschränkt. Vielmehr können die Federelemente 25, gerade auch bei einer Ausbildung aus Kunststoff, als eine Art Rastnocken ausgebildet sein, deren Form bereits bei Spritzgusswerkzeug berücksichtigt wurde.

## Patentansprüche

1. Elektrischer Antrieb mit einem Elektromotor und einer Lagereinrichtung (5), die einen Lagerkörper (6) sowie eine Positioniereinrichtung (10) für den Lagerkörper (6) aufweist, wobei der Lagerkörper (6) in Wirkverbindung mit einem zu lagernden Element (1) angeordnet ist , wobei die Positioniereinrichtung (10) den Lagerkörper (6) formschlüssig aufnimmt und die Positioniereinrichtung (10) mit einem Aufnahmekörper (4) verbunden ist, wobei das zu lagernde Element eine Welle (1) ist und die Welle (1) in dem Lagerkörper (6) drehbeweglich angeordnet ist, wobei die Positioniereinrichtung (10) einen rohrartigen Abschnitt (12) aufweist, der den Lagerkörper (6) an seinem Außenumfang umfasst und, wobei wenigstens ein Teilbereich (25) des rohrartigen Abschnitts (12) gegen mindestens eine Stirnfläche des Lagerkörpers (6) zur Axialfixierung des Lagerkörpers (6) in der Positioniereinrichtung (10) in Anlagekontakt angeordnet ist, wobei der wenigstens eine Teilbereich (25) durch einen Umformprozess nach dem Erreichen der Endposition des Lagerkörpers (6) mit diesem in Anlagekontakt gebracht ist, wobei auf der dem Teilbereich (25) gegenüberliegenden Seite des Lagerkörpers (6) die Positioniereinrichtung (10) einen flanschartigen Bund (13) mit einer Öffnung (14) zur Durchführung der Welle (1) aufweist, der als Axialanschlag für den Lagerkörper (6) ausgebildet ist, wobei die Welle (1) mit dem Elektromotor gekoppelt ist, dessen Anker (2) an einem Ende der Welle (1) angeordnet ist, wobei mittels des anderen Endes der Welle (1) über eine gewindeartige Ausbildung des Wellenstummels ein Zahn- bzw. Stirnrad antreibbar ist, und wobei der als Gehäuse (4) ausgebildete *Aufnahmekörper (4) zur Aufnahme bzw. Befestigung des Zahn- bzw.* Stirnrades und der Positioniereinrichtung (10) dient.

2. **Elektrischer Antrieb** nach **Anspruch** 1,
**dadurch gekennzeichnet,**
**dass die *Positioniereinrichtung* (10) einstückig ausgebildet *ist* und aus Metall** oder Kunststoff besteht.

3. **Elektrischer Antrieb** nach einem der Ansprüche 1 bis 2,
**dadurch gekennzeichnet,**
**dass** die Positioniereinrichtung (10) einen Befestigungsbereich (15) aufweist, der mit dem Aufnahmekörper (4) durch Form- oder Kraftschluss verbunden ist.

4. **Elektrischer Antrieb** nach Anspruch 3,
**dadurch gekennzeichnet,**
**dass** der Befestigungsbereich (15) als Befestigungsflansch (16) ausgebildet ist.

5. **Elektrischer Antrieb** nach einem der Ansprüche 1 bis 4,
**dadurch gekennzeichnet,**
**dass** der elektrische Antrieb ein Fensterheber- oder ein Wischerantrieb für ein Kraftfahrzeug ist.

## Claims

1. Electric drive with an electric motor and with a bearing arrangement (5) which has a bearing body (6) and a positioning device (10) for the bearing body (6), wherein the bearing body (6) is arranged in operative connection with an element (1) to be mounted, the positioning device (10) positively receiving the bearing body (6) and the positioning device (10) being connected to a reception body (4), the element to be mounted being a shaft (1) and the shaft (1) being arranged in a rotationally movable manner in the bearing body (6), the positioning device (10) having a tube-like portion (12) which surrounds the bearing body (6) on its outer circumference, and at least one subregion (25) of the tube-like portion (12) being arranged in bearing contact against at least one end face of the bearing body (6) for axially fixing the bearing body (6) in the positioning device (10), the at least one subregion (25) being brought by means of a forming process into bearing contract with the bearing body (6) after the end position of the latter is reached, the positioning device (10) having, on that side of the bearing body (6) which lies opposite the subregion (25), a flange-like collar (13) with an orifice (14) for leading through the shaft (1), the said collar being designed as an axial stop for the bearing body (6), the shaft (1) being coupled to the electric motor, the armature (2) of which is arranged at one end of the shaft (1), a gearwheel or spur wheel being drivable by means of the other end of the shaft (1) via a thread-like shaping of the shaft stub, and the reception body (4) designed as a housing (4) serving for receiving or fastening the gearwheel or spur wheel on the positioning device (10).

2. Electric drive according to Claim 1, **characterized in that** the positioning device (10) is formed in one piece and consists of metal or plastic.

3. Electric drive according to either one of Claims 1 and 2, **characterized in that** the positioning device (10) has a fastening region (15) which is connected positively or non-positively to the reception body (4).

4. Electric drive according to Claim 3, **characterized in that** the fastening region (15) is designed as a fastening flange (16).

5. Electric drive according to one of Claims 1 to 4, **characterized in that** the electric drive is a windowlifter or wiper drive for a motor vehicle.

## Revendications

1. Entraînement électrique comprenant un moteur électrique et un dispositif de palier (5) qui comprend un corps de palier (6) ainsi qu'un dispositif de positionnement (10) pour le corps de palier (6), le corps de palier (6) étant disposé en liaison fonctionnelle avec un élément (1) à monter, le dispositif de positionnement (10) recevant le corps de palier (6) par complémentarité de formes et le dispositif de positionnement (10) étant relié à un corps de réception (4), l'élément à monter étant un arbre (1) et l'arbre (1) étant disposé de manière mobile en rotation dans le corps de palier (6), le dispositif de positionnement (10) comprenant une portion (12) de type tube qui entoure le corps de palier (6) sur sa périphérie extérieure, et au moins une région partielle (25) de la portion (12) de type tube étant disposée en contact d'appui contre au moins une surface frontale du corps de palier (6) en vue de la fixation axiale du corps de palier (6) dans le dispositif de positionnement (10), l'au moins une région partielle (25) étant amenée, au moyen d'un procédé de façonnage, après que la position finale du corps de palier (6) a été atteinte, en contact d'appui avec celui-ci, le dispositif de positionnement (10) comprenant, sur le côté du corps de palier (6) opposé à la région partielle (25), une collerette (13) de type bride comprenant une ouverture (14) pour le passage de l'arbre (1), laquelle collerette est réalisée sous forme de butée axiale pour le corps de palier (6), l'arbre (1) étant accouplé au moteur électrique, dont l'induit (2) est disposé à une extrémité de l'arbre (1), une roue dentée ou droite pouvant être entraînée au moyen de l'autre extrémité de l'arbre (1) par le biais d'une formation de type filetage du bout d'arbre, et le corps de réception (4) réalisé sous forme de boîtier (4) servant à la réception ou à la fixation de la roue dentée ou droite et du dispositif de positionnement (10).

2. Entraînement électrique selon la revendication 1,
**caractérisé en ce que**
le dispositif de positionnement (10) est réalisé d'une seule pièce et est constitué de métal ou de plastique.

3. Entraînement électrique selon l'une quelconque des revendications 1 et 2,
**caractérisé en ce que**
le dispositif de positionnement (10) comprend une région de fixation (15) qui est reliée au corps de réception (4) par engagement par complémentarité de formes ou par force.

4. Entraînement électrique selon la revendication 3,
**caractérisé en ce que**
la région de fixation (15) est réalisée sous forme de bride de fixation (16).

5. Entraînement électrique selon l'une quelconque des revendications 1 à 4,
**caractérisé en ce que**
l'entraînement électrique est un entraînement de lève-vitre ou d'essuie-glace pour un véhicule automobile.
